# EUROPEAN PATENT SPECIFICATION

(11) **EP 2 184 253 B1**
(45) Date of publication and mention of the grant of the patent: **28.09.2011**
(21) Application number: 09013850.4
(22) Date of filing: 04.11.2009
(51) Int. Cl.: B66F 7/24

(54) **A levelling device**
Nivelliervorrichtung
Dispositif de nivelage

(30) Priority: 05.11.2008 GB 0820236
(43) Date of publication of application: 12.05.2010
(73) Proprietor: Milenco Limited, Wolverton Mill Milton Keynes MK12 5TS (GB)
(72) Inventor: Milbank, Frederick Nigel, Milton Keynes, MK13 0RA (GB)
(74) Representative: Turner, Richard Charles

(56) References cited:
- GB-A- 323 134
- US-A- 2 450 648
- US-B1- 7 104 524

## Description

This invention relates to a lavelling device.

It is known, in relation to the parking of vehicles, to use a levelling device. In many practical situations in relation to the parking of a vehicle such as a caravan, a level surface to park the vehicle cannot be found. On such uneven ground, particularly where it is planned to leave a vehicle for a relatively long period of time, it is known to use a levelling device underneath one or more wheels of the vehicle. Such devices are generally formed as a wedge shape, with a narrow end to receive the wheel, as the vehicle is moved onto the levelling device, and a higher end to locate the wheel, once the vehicle is in position. Examples of levelling devices are shown in GB 323134, US 2450648 and US 7104524.

Existing levelling devices have a number of problems, notable among them that they tend to sink into the ground, when placed on ground that is wet, such as grass, sand or soil after rain, once the vehicle is raised onto the levelling device. This tends to counteract the balancing effect of the levelling device and reduces the effectiveness of the device. Another prominent weakness of existing levelling devices is that it can be difficult for a vehicle wheel to create sufficient grip with respect to the levelling device, when the vehicle is being moved into position. Other weaknesses include the fact that many existing levelling devices are provided with additional components such as a chock, for securing the wheel, and a gripper plate for helping to get the wheel onto the levelling device. These additional components increase the complexity of manufacture of the device and increase the overall expense. Chocks also present a safety hazard to the user and can trap limbs and fingers.

It is therefore an object of the invention to improve upon the known art.

According to the present invention, there is provided a levelling device comprising a wedge-shaped body having a lower surface for contacting the ground and an upper surface for receiving the wheel of a vehicle, characterised in that the lower surface is a substantially planar, substantially continuous surface and the upper surface is a substantially discontinuous surface comprising a series of inter-crossing ribs, the ribs being connected to the lower surface and continuous from the lower surface to the upper surface.

Owing to the invention, it is possible to provide a levelling device that overcomes the two significant problems present in the prior art levelling devices. Firstly, the form of the lower surface, which is a substantially planar, substantially continuous surface, means that the weight through the levelling device from the vehicle above is spread over the widest possible area, and therefore the likelihood of the device sinking into soft ground is greatly reduced. Secondly, the form of the upper surface, which is a substantially discontinuous surface comprising a series of inter-crossing ribs, means that greater grip can be provided for a wheel engaging with the surface, than in current levelling devices.

The upper surface of the levelling device comprises a series of inter-crossing ribs. The use of ribs, with holes in between, creates a good surface for gripping, when the wheel of the vehicle is moved onto the levelling device. Ideally, the ribs are connected to the lower surface of the levelling device and are continuous from the lower surface to the upper surface of the device. The levelling device is therefore also relatively easy to manufacture from plastics material, in such a form, which helps to provide a simple and efficient levelling device that can be used to improve the carrying out of the levelling of a vehicle. The ribs are also relatively strong and rigid, and provide a tough construction in relation to the bearing of a compression force from the vehicle above.

Preferably, the levelling device further comprises a set of spaced out teeth located at the lower end of the upper surface. The provision of the teeth on the front edge of the levelling device improves the grip of the wheel of the vehicle on the upper surface of the levelling device, at the moment when that wheel first engages the levelling device. This improves the functionality of the levelling device, and ensures that the movement of the wheel of the vehicle onto the levelling device is as straightforward as possible. The use of the teeth removes the need for an additional gripper plate on the levelling device.

Advantageously, the upper surface comprises a series of ridges and indentations. The ridges and indentations may be so configured that each ridge is substantially horizontal. Each indentation can be of an arcuate (curved) shape, with the indentations being formed at different heights from the lower surface. The use of the indentations on the levelling device creates locating positions on the top of the levelling device for the wheel of the vehicle to locate. The upper surface of the device therefore has predetermined positions on the levelling device for locating wheels, and this increases the ease of locating the wheel at a desired height on the levelling device. This also helps to keep the wheel in the same position, once the vehicle wheel has been positioned on the levelling device. The use of the indentations and ridges removes the need for a separate chock to be used to retain the wheel of the vehicle.

Embodiments of the present invention will now be described, by way of example only, with reference to the accompanying drawings, in which:-
Figure 1 is a side view of the levelling device supporting a wheel,
Figure 2 is a further side view of the levelling device,
Figure 3 is a top plan view of the levelling device,
Figure 4 is a perspective view from above of the levelling device, and
Figures 5 to 16 are perspective views from above of further embodiments of the levelling device.

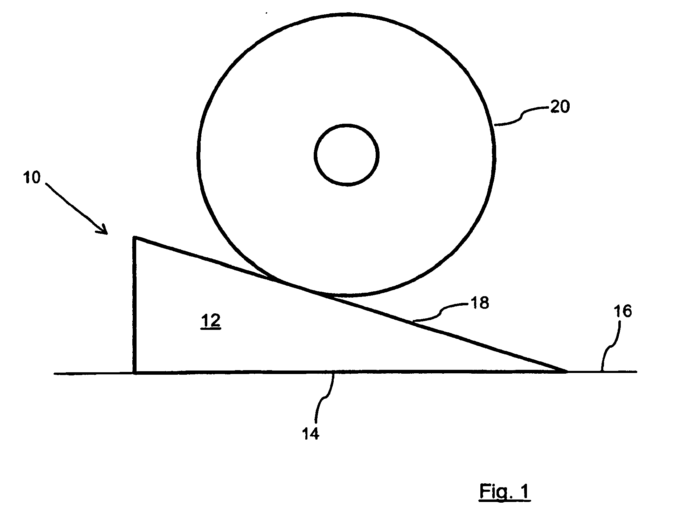

Figure 1 shows the levelling device 10, which comprises a wedge-shaped body 12 having a lower surface 14 for contacting the ground 16 and an upper surface 18 for receiving the wheel 20 of a vehicle. The lower surface 14 of the levelling device 10 is a substantially planar, substantially continuous surface. The design of the lower surface 10 ensures that the weight from the vehicle through the wheel 20 is spread over the widest possible area, reducing the likelihood that the levelling device 10 will sink into soft ground.

The upper surface 18 of the levelling device 10 is a substantially discontinuous surface. In further Figures, the upper surface 18 of the levelling device 10 can be seen in detail. The upper surface 18 of the levelling device 10 can be made discontinuous using holes to be provided in the top surface 18. This helps provide traction, when the wheel 20 engages with the top surface 18 of the levelling device 10. Other methods of assisting in the provision of a discontinuous surface can be used, for example by using a pattern or irregular combination of structural elements with gaps in-between.

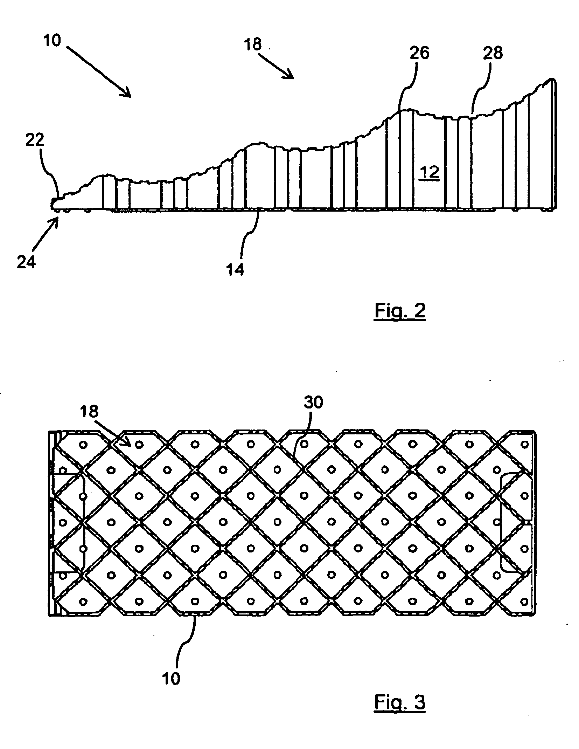

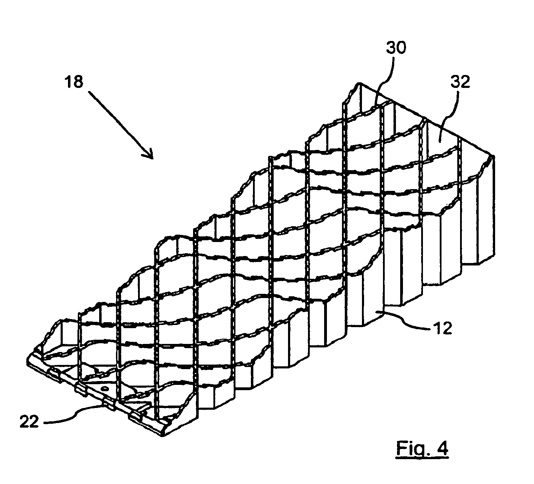

A more detailed side view of the levelling device 10 is shown in Figure 2, which shows in detail the side profile of the preferred embodiment of the levelling device 10. The levelling device 10 is also provided a set of teeth 22 located at the lower end 24 of the upper surface 18. This line of teeth 22 (also seen in Figure 4) further assist in the engaging of the wheel 20 with the levelling device 10, when the wheel 20 is first being moved up the levelling device 10. The teeth 22 provide a gripping edge that is non-continuous and removes the need for an additional component such as a gripping plate, which is present on many existing levelling devices. The teeth 22 will engage with at least part of the tread of a tyre 20 that is being moved onto the device 10, thereby assisting in the traction between the wheel 20 and levelling device 10, as the levelling device 10 is put to use.

The upper surface 18 of the levelling device 10 comprises a series of substantially horizontal ridges 26 and indentations 28. Each indentation 28 is of an arcuate shape, being curved, effectively forming a concave surface. The indentations 28 are formed in the upper surface 18, at different heights from the lower surface 14. The indentations 28 thus create locating positions for the wheel 20. The design of the upper surface 18 increases the ease of locating the wheel 20 at a desired height. This shape of the surface 18 also helps to keep the wheel 20 in the same position, once the vehicle wheel has been positioned on the levelling device 10.

Figure 3 shows a top plan view of the levelling device 10. The upper surface 18 of the levelling device 10 is a substantially discontinuous surface and comprises a series of inter-crossing ribs 30. The ribs 30 are connected to the lower surface 14 of the levelling device 10 and are continuous from the lower surface 14 to the upper surface 18. The levelling device 10 is therefore relatively easy to manufacture from plastics material, in such a form, as the device 10 can be manufactured in a single mould which uses protrusions to form the gaps between the ribs 30. The ribs 30 help to provide a simple and efficient levelling device 10 that can be used to improve the levelling of a vehicle. The ribs 10 are also relatively strong and rigid, and provide a tough construction in relation to the bearing of a compression force from the vehicle above.

A perspective view of the levelling device 10 is shown in Figure 4, where the preferred form of the top surface 18 can be seen more clearly. The discontinuous nature of the upper surface 18 is provided by the surface 18 comprising a series of ribs 30. Indeed, the upper surface 18 comprises a series of inter-crossing ribs 30. The upper surface 18 also comprises a series of holes 32 formed between the ribs 30. The ribs 30 and holes 32 go together to create a surface 18 that will create traction between the levelling device 10 and the wheel 20, when the wheel 20 is driven up the levelling device 10. The ribs 30 are connected to the lower surface 14 of the levelling device 10 and are continuous from the lower surface 14 to the upper surface 18. The inter-crossing ribs 30 are formed in two parallel sets of ribs 30 that are perpendicular to each other.

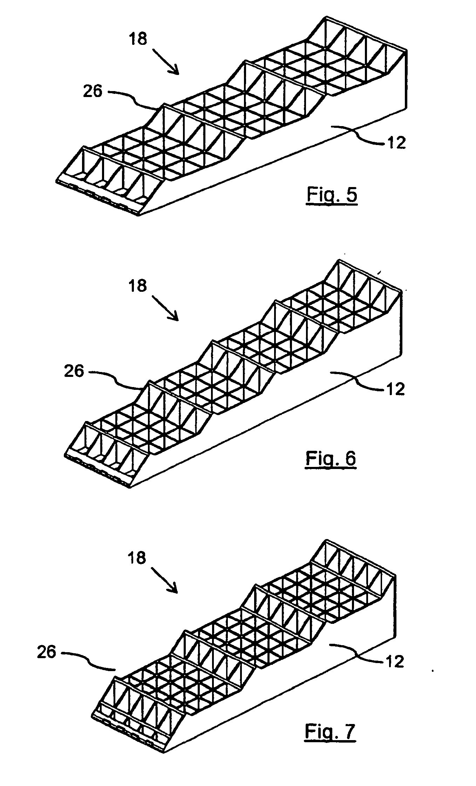

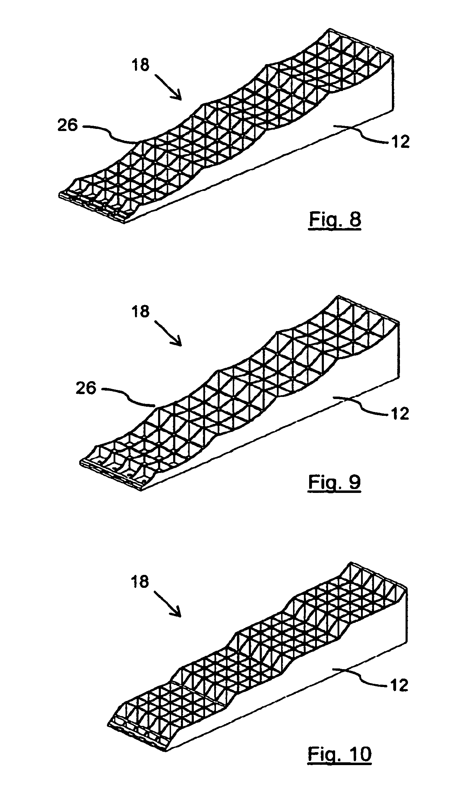

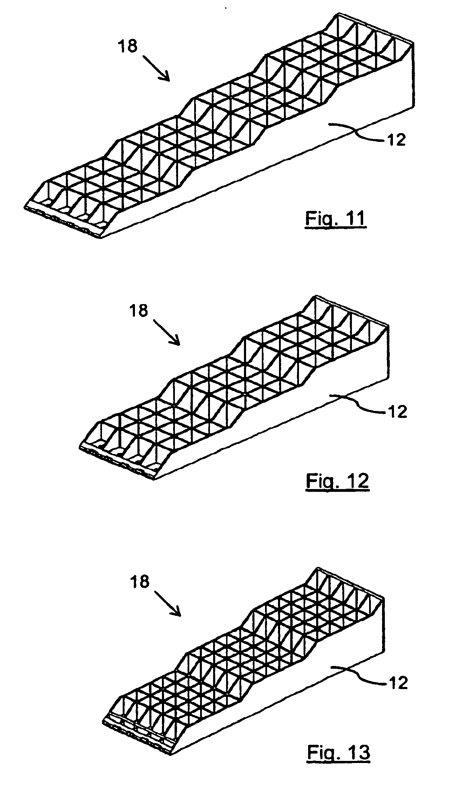

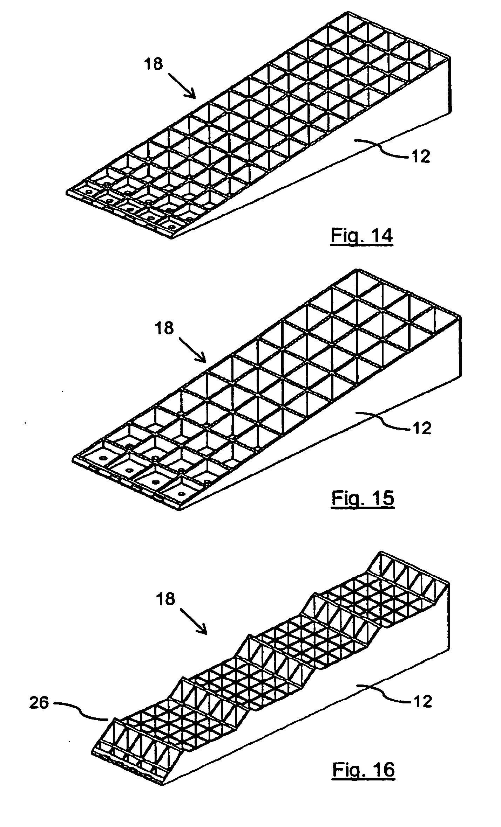

Figures 5 to 16 show different embodiments of the levelling device 10. These embodiments of the levelling device 10 differ from each other in, for example, the number and presence of ridges 26 and corresponding indentations 28 and in the number and configuration of the ribs 30. Some of the indentations 28 are of an arcuate shape, and some are created using substantially straight lines.

## Claims

1. A levelling device (10) comprising a wedge-shaped body (12) having a lower surface (14) for contacting the ground (16) and an upper surface (18) for receiving the wheel (20) of a vehicle, **characterised in that** the lower surface (14) is a substantially planar, substantially continuous surface and the upper surface (18) is a substantially discontinuous surface comprising a series of inter-crossing ribs (30), the ribs (30) being connected to the lower surface (14) and continuous from the lower surface (14) to the upper surface (18).

2. A device according to claim 1, and further comprising a set of teeth (22) located at the lower end (24) of the upper surface (18).

3. A device according to claim 1 or 2, wherein the upper surface (18) comprises a series of ridges (26) and indentations (28).

4. A device according to claim 3, wherein each indentation (28) is of an arcuate shape.

5. A device according to claim 3 or 4, wherein the indentations (28) are formed at different heights from the lower surface (14).

6. A device according to claim 3, 4 or 5, wherein each ridge (26) is substantially horizontal.

7. A device according to any preceding claim, wherein the upper surface (18) comprises a series of holes (32).

## Patentansprüche

1. Eine Nivelliervorrichtung (10), die einen keilförmigen Körper (12) umfasst, der eine Unterseite (14) zur Kontaktaufnahme mit dem Boden (16) sowie eine Oberseite (18) zur Aufnahme eines Fahrzeugrads (20) aufweist, **dadurch gekennzeichnet, dass** die Unterseite (14) eine im Wesentlichen ebene sowie im Wesentlichen kontinuierliche Oberfläche und die Oberseite (18) eine im Wesentlichen diskontinuierliche Oberfläche mit einer Reihe sich überkreuzender Rippen (30) ist, wobei die Rippen (30) mit der Unterseite (14) sowie von der Unterseite (14) kontinuierlich mit der Oberseite (18) verbunden sind.

2. Eine Anspruch 1 entsprechende Vorrichtung, die ferner einen Satz von Zähnen (22) aufweist, die am unteren Ende (24) der Oberseite (18) angeordnet sind.

3. Eine Anspruch 1 oder 2 entsprechende Vorrichtung, deren Oberseite (18) eine Reihe von Graten (26) und Vertiefungen (28) umfasst.

4. Eine Anspruch 3 entsprechende Vorrichtung, bei der jede Vertiefung (28) von gebogener Form ist.

5. Eine Anspruch 3 oder 4 entsprechende Vorrichtung, deren Vertiefungen (28) auf unterschiedlichen Höhen von der Unterseite (14) gebildet sind.

6. Eine Anspruch 3, 4 oder 5 entsprechende Vorrichtung, bei der jeder Grat (26) im Wesentlichen horizontal ist.

7. Eine jedem vorstehenden Anspruch entsprechende Vorrichtung, deren Oberseite (18) eine Reihe von Löchern (32) umfasst.

## Revendications

1. Dispositif niveleur (10) pourvu d'un corps cunéiforme (12) ayant une surface inférieure (14) pour se mettre en contact avec le sol (16) et une surface supérieure (18) pour recevoir la roue (20) d'un véhicule, **caractérisé en ce que** la surface inférieure (14) est une surface sensiblement plane, sensiblement continue et la surface supérieure (18) est une surface sensiblement discontinue comprenant une série de nervures entrecroisées (30), les nervures (30) étant connectées à la surface inférieure (14) et étant continues depuis la surface inférieure (14) à la surface supérieure (18).

2. Dispositif selon la revendication 1, et comportant en outre un jeu de dents (22) situé à l'extrémité inférieure (24) de la surface supérieure (18).

3. Dispositif selon la revendication 1 ou 2, dans lequel la surface supérieure (18) comporte une série de crêtes (26) et d'indentations (28).

4. Dispositif selon la revendication 3, dans lequel chaque indentation (18) est de forme incurvée.

5. Dispositif selon la revendication 3 ou 4, dans lequel les indentations (28) sont formées à différentes hauteurs depuis la surface inférieure (14).

6. Dispositif selon la revendication 3, 4 ou 5, dans lequel chaque crête (26) est sensiblement horizontale.

7. Dispositif selon l'une quelconque des revendications précédentes, dans lequel la surface supérieure (18) comporte une série d'orifices (32).
